# EUROPEAN PATENT SPECIFICATION

(11) **EP 0 537 891 B1**
(45) Date of publication and mention of the grant of the patent: **02.06.1999**
(21) Application number: 92307792.9
(22) Date of filing: 26.08.1992
(51) Int. Cl.: B29C 33/62, B29K 21/00

(54) **Water soluble release compositions**
Wasserlösliche Zusammensetzung von Formtrennmittel
Compositions pour agents de démoulage solubles dans l'eau

(30) Priority: 15.10.1991 US 776014
(43) Date of publication of application: 21.04.1993
(73) Proprietor: Huntsman Corporation, Salt Lake City, Utah 84111-1053 (US)
(72) Inventor: NIEH, Edward Chung-Yit, Austin, Texas 78759 (US)
(74) Representative: Goddar, Heinz J., Dr.

(56) References cited:
- DE-A- 2 337 462
- FR-A- 2 439 229
- US-A- 4 217 394
- US-A- 4 496 632
- US-A- 4 496 632
- US-A- 4 555 549

## Description

This invention relates to compositions suitable for use as mandrel release agents. More particularly the invention relates to three component compositions which function as mandrel release agents for processing rubber based elastomers. These compositions combine the more desirable properties traditionally found in liquid lubricants and polyethylene glycol lubricants. They have optimum viscosity at application temperatures, and result in immobile films which are smooth without brittleness at ambient temperatures.

In addition, these release agents are stable at rubber curing temperatures, compatible with most natural and synthetic rubber parts, do not cause swelling or shrinkage of such parts, and provide a lubricating function during demoulding. The release agent compositions can be adapted to cover a wide range of viscosities, lubricities and melting points, to fit different types of rubber parts and moulding equipment.

In many areas of plastics and rubber processing, release agents are important aids. These release agents are found in the market under different names, such as mandrel release agents, mould release agents, anti-adhesion promoters, demoulding agents, anti-adhesives and separating agents. There are fields of applications in which the use of release agents is critical to the manufacture of certain products, and other applications where the agents modify the surface, or merely facilitate the work. More detail on the role of such agents is discussed in the Journal Article titled "STATE OF DEVELOPMENT OF RELEASE AGENTS USE IN PLASTICS PROCESSING," Rathje, G., Kunststuffe; German Plastics, Vol. 75, No. 2, Feb. 1985, pp. 12-13. Details are given on conventional release agents, separation systems and coating techniques.

An article in Muanyag Es Gumiv Vol 21, No. 9, Sept. 1984, pp. 271-273 describes the application of some adhesion-preventing agents in the manufacture of rubber products. Because of the heat introduced and/or released during moulding and vulcanization of rubber products, moulded products often adhere to the moulds, so there is some damage to the product at the time of demoulding. Different so-called mould lubricants are used to prevent this adhesion and ease the product release.

Another journal article discusses the fast growing market for lubricants in the plastics industry. The variety of the chemical compositions of the plastics to which they are added, and the processes that are used in conversion of them, provides a wide range of effects. See Chemische Industrie International (English Translation), No. 3, 1987, pp. 13, 16-19.

A product bulletin, The Polyglycol Handbook, published by Dow Chemical Co., 1988, pp. 22-23, discusses the use of polyethylene glycols in the role of mould release agents and lubricants in the rubber industry.

The Dow bulletin indicates that polyethylene glycols can be used in mould release agents for latex foams. A lower molecular weight liquid polyethylene glycol can be used as a mould release agent in the production of articles prepared from latex rubber. In addition, water-soluble liquid polyglycols are used alone, or in combination with higher molecular weight polyglycols, as mould and mandrel lubricants in the production of fire hose, rubber hose and shoe heels.

According to JEFFOX® Polyethylene Glycols, published by Texaco Chemical Company, 1983, (pages 12-13) several polyethylene glycols in the JEFFOX® product line are useful as mould release agents.

A bulletin titled Newpol LB Series 50 HB Series 75H Series (Bulletin No. D105-201-1), published by Sanyo Chemical Industries, October 1976, contains a discussion of that company's product line of polyalkyleneamines and their use as mould release agents.

JP-A-58132090 discloses compositions for releasing rubber hose from mandrels, which are prepared by addition-polymerizing NH₃ or an amine (e.g. mono-, di- or triethanolamine) with an alkylene oxide, such as ethylene oxide and/or propylene oxide.

Conventional releasing agents include polypropylene glycol, polyoxypropylene glycerol ether, polyoxyethylene/polyoxypropylene block copolymer, polyoxypropylene/polyoxyethylene glycerol ether, polyethylene glycol, silicone oil, animal or vegetable oil or mineral oil.

In a paper delivered at the Society of the Plastics Industry, Reinforced Plastics/Composite Institute, Annual Conference-Proceedings 43rd, published by SPI, Washington, D.C., USA, 1988, pp. 12A.1-12A.6, James Werner reviewed the benefits of using perfluorinated polyethers as mould release agents in rotational moulding of polyethylene and polycarbonate, moulding of epoxy resins and graphite fibers, moulding of solid propellent rocket fuels, and moulding of intricate ceramic parts.

RO-A-82386, discloses a mixture which contains 5-60% by weight of a polyether polymer and/or copolymer of the formula:

X-(OCHYCH₂)ₙ-(OCH₂CHY)ₘ-OH

where X is H, Me, Et, C₃H₇ or C₄H₉, Y is H or Me, n and m are 1-50, and 0.1-5% by weight of ionic or nonionic surfactants, such as alkylaryl sulphonate and sulphated or ethyoxylated fatty alcohols, 1 to 6000 ppm, based on weight of total mixture, of a corrosion inhibiter specific to the contacting metal, the balance being deionized water. The composition can be used as antiadhesives in the production of rubber articles, plastics materials, and synthetic resins and in casting concrete.

US-A-4217394 discloses mould-release compositions suitable for lubricating metal moulds, such as the type used in moulding natural and synthetic rubber, and other polymers. The mould release agents are oxidation-stable homopolymers and copolymers, i.e. block or heteric polyoxyalkylene lubricant compounds. The lubricants can be used alone, or in mixtures with polyoxyalkylene lubricant compounds known in the art. Where polyoxyalkylene glycols are used in the art as mandrel or mould release agents, the applications for each are usually limited because of the narrow range of viscosity, lubricity and melting points which are suitable for each type of polyethylene glycol.

In the art relating to release agents, traditionally liquid lubricants and polyethylene glycol lubricants have been useful, although some undesirable properties are characteristic of each.

Liquid lubricants are usually diluted, and the amount of dilution controls the viscosity of the film in the mould. Generally, the viscosities of the films tend to be higher, but they are still in a liquid state.

Alternatively, polyethylene glycols can be used as mould release agents. These compounds are used in solid form. They are applied in molten form, and are often of a thin viscosity at application temperatures. As these agents cool on the moulded parts, they leave a solid film that is brittle. With articles such as rubber hoses, elastomeric parts or flexible parts, a solid film exhibiting brittleness will flake off.

There is a need in the art for a release agent which represents a combination of the more desirable properties of both liquid lubricants and polyethylene glycol lubricants. It would represent a distinct advance in the art if a release agent were formulated which had the most desirable viscosity at application temperatures and resulted in a solid film which was smooth but exhibited no brittleness or cracking.

A release agent composition which could be adjusted to cover a wide range of viscosities, lubricities and melting points and was adaptable to fit a number of different types of moulding equipment would resolve many of the problems commonly associated with work in the field of moulding rubber and plastics.

It would be especially valuable in the art to define a release agent composition possessing these desirable characteristics wherein the melting point of the formula could be precisely controlled by adjustment of one of the components in the composition.

In accordance with the foregoing, the instant invention is directed to a three-component water soluble mould release composition suitable for processing rubber-based elastomers. It comprises one or more water soluble copolymers as ethylene oxide and propylene oxide, a highly crystalline polyoxyalkylene compound which melts at slightly above ambient temperatures, and one or more antioxidant additives. In the molten state, the second component has a relatively low viscosity in comparison with the first component.

In its broadest aspect, the present invention provides a release agent composition which comprises:
(a) 85 to 40 % by weight of a component which is liquid at ambient temperatures and comprises one or more water soluble copolymers of ethylene oxide and propylene oxide;
(b) 15 to 60 % by weight of a crystalline polyethyleneglycol compound, having a melting point slightly above ambient; and
(c) 100 to 5000 ppm, based on total composition weight, of one or more antioxidant additives.

The composition preferably comprises 50 to 80 % by weight of liquid component (a), and 20 to 50 % by weight of the crystalline polyethyleneglycol compound (b).

The invention also relates to the use of a composition as defined above, as a release agent in the processing of rubber-based elastomers.

The invention provides a mandrel or mould release agent with the following advantages over any similar agent known in the art:
1) These novel release agents are compatible with most natural and synthetic rubber parts;
2) They lead to a very minimal amount of swelling or shrinkage of parts and, in fact, cause almost no swelling or shrinkage of parts;
3) They provide anti-sticking and lubrication function during demoulding;
4) They are stable at rubber-curing temperatures, and they possess high load resistance and excellent shear stability;
5) They provide a wide range of viscosity, lubricity and melting points, to fit any given moulding equipment;
6) They provide a seasonably adjustable formulation, by allowing precise control over the melting point;
7) They can be formulated to the same viscosity at processing temperature for very consistent moulding and demoulding, according to the specification of the processing equipment;
8) They can also be formulated to develop different ambient temperature properties which meet the requirements of desirable post moulding properties, for example, solidifying to a smooth and thin film without cracking.

The ability to vary the post moulding properties ensures that the formulation can be adjusted to meet a wide range of processing variables, such as the type of rubber involved, the size of the parts, the ambient temperature, and the processing equipment.

In the composition of this invention the first component comprises random or block copolymers of ethylene oxide and propylene oxide, which should preferably contain at least 30% to 80% by weight of oxyethylene units.

These polymers can be made by base-catalyzed addition of ethylene oxide and propylene oxide to mono-, di and tri-functional initiators, until a suitable molecular weight is reached. The copolymer can be prepared by reacting an initiator, such as diethylene glycol, with a mixture of ethylene oxide and propylene oxide. The ethylene oxide and propylene oxide are preferably present in a ratio of from 75:25 to 50:50. The reaction is exothermic, however, and should preferably be controlled by maintaining the reaction temperature between 115 and 120°C. The pressure is not critical and the reaction generally takes place at 0.1 to 1.1 MPa (atmospheric to 150 psi pressure).

Several commercially available compositions which exhibit these properties are TEXOX® WL-660, WL-3300 and WL-5000. TEXOX® WL-660, WL-3300 and WL-5000 are water soluble synthetic functional fluids which are derivatives of propylene oxide or propylene oxide and ethylene oxide. The molecular weights of WL-660, WL-3300 and WL-5000 are 1800, 2700 and 4365 respectively. The viscosities for WL-660, WL-3300, and WL-5000 are 143.10⁻⁶ m²/s, 720.10⁻⁶ m²/s and 1200.10⁻⁶ m²/s (143 cs, 720 cs and 1200 cs) measured at 38°C respectively.

The suitable molecular weight for these polymers differs according to the desired viscosity for a given application. In general, the useful viscosity of the liquid polymer component is 400.10⁻⁶ to 1250.10⁻⁶ m²/s (400 to 1250 cs) measured at 38°C. A suitable viscosity to cover the middle viscosity ranges can be obtained by blending a high viscosity polymer and a low viscosity polymer.

The second component comprises a polyethyleneglycol compound. Suitable products include TEXOX® PEG-850, PEG-900, PEG-950, PEG-1000 and PEG-1050. TEXOX® PEG series products are polyethylene glycols having an approximate molecular weitht between 850 and 1050.

As indicated, the third component comprises one or more antioxidant additives. Examples of useful antioxidants are phenolic compounds, aromatic amine derivatives, and organo tin compounds. Preferred antioxidant additives include 2,6-di-tert-butyl-4-methylphenol, para-methoxyphenol, N-n-butyl-para-aminophenol, N, N'-diphenyl-p-phenylenediamine, N,N'-dimethyl-para-phenylenediamine, N-phenyl-β-methylamine, phenothiazine, tin(II)octanoate and tin(II)acetate.

The three component mould release compositions of this invention are suitable for a wide variety of general polymer processing methods or moulding techniques. The amount of mould-release composition employed generally will depend upon the particular use for which the mould release composition is employed and the particular polymers or rubber employed. The mould release compositions should be added separately to a cold mould. In the process of lubricating a metal mould, the three component release agent of this invention is applied to the mould surface as a molten liquid, optionally in admixture with an inert, volatile diluent or carrier. If a diluent is employed, said release agent is dissolved or dispersed in said inert, volatile liquid diluent or carrier in the use of the mould release compositions. Generally the concentration of the composition of this invention in the carrier is not narrowly critical and can vary widely depending on the intended use. The amount of solvent or carrier will govern the viscosity of the film. The concentration of the inert carrier will generally vary from 0.1 to 90% by weight, preferably 15 to 85% by weight, based on the total composition. The mould release compositions are readily prepared by mixing the essential ingredients of this invention with the carrier by, for example, stirring.

Example 1 demonstrate a method for preparing the first component, labelled a polyoxyalkylene intermediate. In the method of this invention the first component comprising the water soluble copolymer is blended with the second component, the crystalline polyethyleneglycol compound before any addition of an antioxidant. It is noted that some combinations exhibit reduced high temperature viscosity. Example 10 demonstrates how increasing stiffness of the mould release agent can be achieved by the crystalline component.

The invention will be further illustrated by the following specific Examples.

### EXAMPLE 1

### Preparation of an 800 Molecular Weight Polyoxyalkylene Intermediate

A clean and dried kettle was charged with 2.27 kg (5.0 lb) of diethylene glycol, and 110 grams of 45% aqueous potassium hydroxide. The contents of the kettle were heated to 70°C. The kettle temperature was raised to 100°C by the exothermic reaction after the addition of 91g (0.2lb) of a mixture of ethylene oxide and propylene oxide, (50/50 by weight). The addition of the ethylene oxide/propylene oxide mixture was continued while controlling the reaction temperature at 115 to 120°C, and reaction pressure at 0.44 MPa (50 psi) until a total of 18.16 kg (40.0 lb) of the mixture was reacted. The number average molecular weight of the product was 787 according to the terminal group analysis.

### EXAMPLE 2

### Preparation of Polyoxyalkylene Blending Stock A

A polyoxyalkylene blending stock was prepared by reacting 3.63 kg (8.0 lb) of the intermediate prepared in Example 1, and 14.53 kg (32.0 lb) of a mixture of ethylene oxide and propylene oxide, (50/50 by weight) at 115°C and 0.44 MPa (50 psi) pressure. The product was neutralized with 280 grams of Magnesol® and filtered. The viscosity of the product was 472.10⁻⁶ m²/s (472 cs) measured at 38°C.

Magnesol® is the trademark for a synthetic adsorptive magnesium silicate, produced by FMC corporation.

### EXAMPLE 3

### Preparation of Polyoxyalkylene Blending Stock B

By a procedure similar to Example 2, a polyoxyalkylene blending stock was prepared from 3.18 kg (7.0 lb) of the intermediate prepared in Example 1, and 14.53 kg (32.0 lb) of a mixture of ethylene oxide and propylene oxide, (50/50 by weight). The viscosity of the product was 537.10⁻⁶ m²/s (537 cs) measured at 38°C.

### EXAMPLE 4

### Preparation of Polyoxyalkylene Blending Stock C

By a procedure similar to Example 2, a polyoxyalkylene blending stock was prepared from 1.27 kg (2.8 lb) of the intermediate prepared in Example 1, and 1.59 kg (3.5 lb) of a mixture of ethylene oxide and propylene oxide, (50/50 by weight). The viscosity of the product was 163.10⁻⁶ m²/s (163 cs) measured at 38°C.

### EXAMPLE 5

### Preparation of Polyoxyalkylene Blending Stock D

By a procedure similar to Example 2, a polyoxyalkylene blending stock was prepared from 2.50 kg (5.5 lb) of the intermediate prepared in Example 1, and 14.98 kg (33.0 lb) of a mixture of ethylene oxide and propylene oxide, (50/50 by weight). The viscosity of the product was 703.10⁻⁶ m²/s (703 cs) measured at 38°C.

### EXAMPLE 6

### Preparation of Polyoxyalkylene Blending Stock E

By a procedure similar to Example 2, a polyoxyalkylene blending stock was prepared from 1.82 kg (4.0 lb) of the intermediate prepared in Example 1, and 13.51 kg (29.75 lb) of a mixture of ethylene oxide and propylene oxide, (50/50 by weight). The viscosity of the product was 1122.10⁻⁶ m²/s (1122 cs) measured at 38°C.

### EXAMPLE 7

### Preparation of Polyoxyalkylene Blending Stock F

A polyoxyethylene blending stock, number average molecular weight 1000, was prepared in a small kettle by reacting 3.63 kg (8.0 lb) of diethylene glycol, 40 grams of an aqueous solution of potassium hydroxide, (45% by weight) and 31.78 kg (70.0 lb) of ethylene oxide at 110°C and 0.44 MPa (50 psi). The resulting product was treated with an aqueous slurry of Magnesol® (150 grams in 150 ml of water), stripped to dryness, and filtered. The number average molecular weight was 1000 according to terminal group analysis.

### EXAMPLE 8

### Preparation of Polyoxyalkylene Blending Stock G

By a procedure similar to Example 7, a polyoxyethylene blending stock, number average molecular weight 900, was prepared from 2.04 kg (4.5 lb) of diethylene glycol, and 14.76 kg (32.5 lb) of ethylene oxide. The number average molecular weight was established by terminal group analysis.

### EXAMPLE 9

Four mould release formulations were prepared from polyoxyalkylene blending stocks A, F and G. Results are summarized below:

| | **Composition, %** | | | **Viscosity,** m²/s(x10⁻⁶) | | | **Melting Point** |
|---|---|---|---|---|---|---|---|
| | A | F | G | 38°C | 65.5°C | 99°C | °C |
| 9-a | 100 | -- | -- | 472 | 164 | 62 | <10 |
| 9-b | 80 | 20 | -- | 364 | 136 | 58 | 36 |
| 9-c | 70 | 30 | -- | 323 | 120 | 52 | 37 |
| 9-d | 70 | -- | 30 | 321 | 119 | 51 | 34 |

This Example demonstrates that the use of the crystalline component blending stocks F and G reduces the high temperature viscosity. These blends solidify to a desired paste-like consistency when cooled to ambient temperature.

### EXAMPLE 10

Mould release formulations were prepared from blending stocks B, F and G. Results are summarized below:

| | **Composition, %** | | | **Viscosity,**m²/s(x10⁻⁶) | | | **Melting Point** |
|---|---|---|---|---|---|---|---|
| | B | F | G | 38^{o}C | 65.5^{o}C | 99^{o}C | °C |
| 10-a | 100 | -- | -- | 537 | 200 | 69 | <0 |
| 10-b | 80 | 20 | -- | 411 | 153 | 67 | 37 |
| 10-c | 70 | 30 | -- | 323 | 120 | 52 | 37 |
| 10-d | 60 | 40 | -- | 322 | 127 | 50 | 37 |
| 10-e | 70 | -- | 30 | 357 | 133 | 57 | 34 |
| 10-f | 60 | -- | 40 | 327 | 127 | 50 | 34 |

These formulations show that the stiffness of the mould release agent can be increased by increasing the crystalline component in the formulation.

### EXAMPLE 11

Mould release formulations were prepared from blending stocks B, F and G. Results are summarized below:

| | **Composition, %** | | | **Viscosity,**m²/s(x10⁻⁶) | | | **Melting Point** |
|---|---|---|---|---|---|---|---|
| | D | F | G | 38^{o}C | 65.5^{o}C | 99^{o}C | °C |
| 11-a | 100 | -- | -- | 703 | 257 | 113 | <0 |
| 11-b | 65 | 35 | -- | 426 | 150 | 61 | 37 |
| 11-c | 65 | -- | 35 | 415 | 150 | 61 | 34 |

### EXAMPLE 12

Mould release formulations were prepared from blending stocks B, F and G. Results are summarized below:

| | **Composition, %** | | | | **Viscosity,**m²/s(x10⁻⁶) | | | **Melting Point** |
|---|---|---|---|---|---|---|---|---|
| | C | E | F | G | 38^{o}C | 65.5^{o}C | 99^{o}C | °C |
| 12-a | 25 | 75 | -- | -- | 716 | 263 | 106 | <0 |
| 12-b | 16.3 | 48.7 | 35 | -- | 413 | 150 | 64 | 37 |
| 12-c | 16.3 | 48.7 | -- | 35 | 413 | 150 | 60 | 34 |

### EXAMPLE 13

To a homogenous mixture of blending stock C (16.3%), blending stock E (48.7%) and blending stock F (35%) heated at 60°C was added an effective amount (750 ppm) of antioxidant additives as listed below. These mould release compositions were evaluated as mandrel release agents in a rubber hose forming process. The rubber hose was readily released from the mandrel. The residue release agent remained as a thin film on the hose without dripping or flaking until removed by washing with water.

| Example | Compound |
|---|---|
| 13 a | 2,6-di-tert-butyl-4-methylphenol |
| b | para-methoxyphenol |
| c | N-n-butyl-para-aminophenol |
| d | N,N'-diphenyl-p-phenylenediamine |
| e | N,N'-dimethyl-para-phenylenediamine |
| f | N-phenyl-β-methylamine |
| g | phenothiazine |
| h | tin(II)octanoate |
| i | tin(II)acetate |

## Claims

1. A release agent composition characterized in that it comprises:
(a) 85 to 40 % by weight of a component which is liquid at ambient temperatures and comprises one or more water soluble copolymers of ethylene oxide and propylene oxide;
(b) 15 to 60 % by weight of a crystalline polyethylene glycol having a molecular weight of 800 to 1200 and a melting point slightly above ambient; and
(c) 100 to 5000 ppm, based on total composition weight, of one or more antioxidant additives.

2. A composition according to Claim 1 characterised in that the water soluble copolymer of ethylene oxide and propylene oxide contains at least 40 % by weight of oxyethylene units.

3. The composition of Claim 1 wherein the viscosity of the liquid component is from 400.10⁻⁶ to 1250.10⁻⁶ m²/s (400 to 1250 cs) measured at 38°C.

4. A composition according to any one of Claims 1 to 3 characterized in that the antioxidant additives (c) are selected from phenolic compounds, aromatic amine derivatives and organic tin compounds.

5. A composition according to Claim 4 characterized in that the antioxidant additives are selected from 2,6-di-tert-butyl-4-methylphenol, para-methoxyphenol, N-n-butyl-para-aminophenol, N,N'-diphenyl-p-phenylenediamine, N,N'-dimethyl-para-phenylenediamine, N-phenyl-β-methylamine, phenothiazine, tin(II)octanoate and tin(II)acetate.

6. A composition according to any one of Claims 1 to 5 characterized in that it comprises 50 to 80 % by weight of liquid component (a), and 20 to 50 % by weight of the crystalline polyethylene glycol (b).

7. A composition according to any one of Claims 1 to 6 characterized in that it comprises 0.1 to 90 % by weight, based on total composition, of an inert volatile diluent.

8. Use of a composition according to any one of Claims 1 to 7 as release agent in the processing of rubber-based elastomers.

## Patentansprüche

1. Eine Trennmittelzusammensetzung, dadurch gekennzeichnet, daß sie umfaßt:
(a) 85 bis 40 Gew.-% einer Komponente, die bei Umgebungstemperaturen flüssig ist und ein oder mehrere wasserlösliche Copolymere von Ethylenoxid und Propylenoxid umfaßt;
(b) 15 bis 60 Gew.-% eines kristallinen Polyethylenglykols mit einem Molekulargewicht von 800 bis 1.200 und einem Schmelzpunkt leicht oberhalb Umgebungstemperatur; und
(c) 100 bis 5.000 ppm, bezogen auf das Gesamtzusammensetzungsgewicht, eines oder mehrerer Antioxidationsadditive.

2. Eine Zusammensetzung nach Anspruch 1, dadurch gekennzeichnet, daß das wasserlösliche Copolymer von Ethylenoxid und Propylenoxid wenigstens 40 Gew.-% Oxyethylen-Einheiten enthält.

3. Die Zusammensetzung nach Anspruch 1, wobei die Viskosität der flüssigen Komponente von 400.10⁻⁶ bis 1250.10⁻⁶ m²/s (400 bis 1.250 cs), gemessen bei 38°C, beträgt.

4. Eine Zusammensetzung nach einem der Ansprüche 1 bis 3, dadurch gekennzeichnet, daß die Antioxidationsadditive (c) ausgewählt sind aus phenolischen Verbindungen, aromatischen Aminderivaten und zinnorganischen Verbindungen.

5. Eine Zusammensetzung nach Anspruch 4, dadurch gekennzeichnet, daß die Antioxidationsadditive ausgewählt sind aus 2,6-Di-tert.-butyl-4-methylphenol, para-Methoxyphenol, N-n-Butyl-para-aminophenol, N,N'-Diphenyl-p-phenylendiamin, N,N'-Dimethyl-para-phenylendiamin, N-Phenyl-β-methylamin, Phenothiazin, Zinn(II)-octanoat und Zinn(II)-acetat.

6. Eine Zusammensetzung nach einem der Ansprüche 1 bis 5, dadurch gekennzeichnet, daß sie 50 bis 80 Gew.-% flüssige Komponente (a) und 20 bis 50 Gew.-% des kristallinen Polyethylenglykols (b) umfaßt.

7. Eine Zusammensetzung nach einem der Ansprüche 1 bis 6, dadurch gekennzeichnet, daß sie 0,1 bis 90 Gew.-%, bezogen aufdie Gesamtzusammensetzung, eines inerten flüchtigen Verdünnungsmittels umfaßt.

8. Verwendung einer Zusammensetzung nach einem der Ansprüche 1 bis 7 als Trennmittel bei der Verarbeitung von Kautschuk-/Gummielastomeren.

## Revendications

1. Composition d'agent de démoulage caractérisée en ce qu'elle comprend :
(a) 85 à 40 % en poids d'un composant qui est liquide à la température ambiante et qui comprend un ou plusieurs copolymères solubles dans l'eau d'oxyde d'éthylène et d'oxyde de propylène;
(b) 15 à 60 % en poids d'un polyéthylèneglycol cristallin, présentant une masse moléculaire de 800 à 1200 et point de fusion légèrement supérieur à la température ambiante; et
(c) 100 à 5 000 ppm, par rapport au poids total de la composition, d'un ou plusieurs additifs anti-oxydants.

2. Composition selon la revendication 1, caractérisée en ce que le copolymère soluble dans l'eau d'oxyde d'éthylène et d'oxyde de propylène contient au moins 40 % en poids de motifs oxyéthylène.

3. Composition selon la revendication 1, dans laquelle la viscosité du composant liquide est de 400.10⁻⁶ à 1250.10⁻⁶ m²/s (400 à 1250 cs) mesurée à 38°C.

4. Composition selon l'une quelconque des revendications 1 à 3, caractérisée en ce que les additifs anti-oxydants (c) sont choisis parmi des composés phénoliques, des dérivés d'amines aromatiques, et des composés organiques de l'étain.

5. Composition selon la revendication 4, caractérisée en ce que les additifs anti-oxydants sont choisis parmi le 2,6-di-tert-butyl-4-méthylphénol, le para-méthoxyphénol, le N-n-butyl-para-aminophénol, la N,N'-diphényl-p-phénylènediamine, la N,N'-diméthyl-para-phénylènediamine, la N-phényl-β-méthylamine, la phénothiazine, l'octanoate d'étain(II) et l'acétate d'étain(II).

6. Composition selon l'une quelconque des revendications 1 à 5, caractérisée en ce qu'elle comprend 50 à 80 % en poids du composant liquide (a), et 20 à 50 % en poids du polyéthylèneglycol cristallin (b).

7. Composition selon l'une quelconque des revendications 1 à 6, caractérisée en ce qu'elle comprend 0,1 à 90 % en poids, par rapport à la composition totale, d'un diluant volatil inerte.

8. Utilisation d'une composition selon l'une quelconque des revendications 1 à 7, comme agent de démoulage dans la mise en oeuvre d'élastomères à base de caoutchouc.
